# EUROPÄISCHE PATENTSCHRIFT

(11) **EP 3 898 491 B1**
(45) Veröffentlichungstag und Bekanntmachung des Hinweises auf die Patenterteilung: **01.02.2023**
(21) Anmeldenummer: 19809113.4
(22) Anmeldetag: 02.12.2019
(51) Int. Cl.: B66B 25/00, B66B 1/34

(54) **ERFASSUNG VON BENUTZERN EINER PERSONENTRANSPORTANLAGE**
DETECTION OF USERS OF A PASSENGER TRANSPORT SYSTEM
DÉTECTION D'UTILISATEURS D'UNE INSTALLATION DE TRANSPORT DES PERSONNES

(30) Priorität: 21.12.2018 EP 18215792
(43) Veröffentlichungstag der Anmeldung: 27.10.2021
(73) Patentinhaber: INVENTIO AG, 6052 Hergiswil (CH)
(72) Erfinder: ORTBAUER, Martin, 1090 Wien (AT)
(74) Vertreter: Inventio AG
(86) Internationale Anmeldenummer: PCT/EP2019/083283
(87) Internationale Veröffentlichungsnummer: WO 2020/126434

(56) Entgegenhaltungen:
- JP-A- 2011 011 901
- JP-A- 2014 015 306
- US-A- 4 706 227

## Beschreibung

Die Erfindung betrifft eine Personentransportanlage mit einer Vorrichtung zur Erfassung von Benutzern sowie ein Verfahren zur Erfassung von Benutzern dieser Personentransportanlage mit einer entsprechenden Vorrichtung.

Personentransportanlagen wie Aufzüge, Fahrtreppen und Fahrsteige werden insbesondere in urbanen Bereichen eingesetzt, um Benutzerströme zu lenken und deren Dynamik aufrecht zu erhalten. Aufgrund des globalen Bevölkerungswachstums und der zunehmenden Konzentration auf urbane Gebiete steigen auch die pro Zeiteinheit zu befördernden Benutzer einer Personentransportanlage, insbesondere in öffentlichen Bauwerken wie Bahnhöfen, Flughäfen und U-Bahnstationen.

Da die Anzahl beförderter Benutzer auch ein Mass für die Abnutzung von Verschleissteilen wie Führungsrollen, Gleitelemente, Tragelemente, Antriebskomponenten und dergleichen mehr darstellt, kann aus einer Erfassung von Benutzerzahlen unter Berücksichtigung von Erfahrungswerten ein Wartungszeitpunkt errechnet werden. Zudem kann es bei sehr stark frequentierten Personentransportanlagen auch aus Sicherheitsgründen vorteilhaft sein, die Anzahl der auf der Personentransportanlage befindlichen Benutzer zu erfassen, um bei einer Überbeladung entsprechende Sicherheitsmassnahmen einzuleiten.

Hieraus ergibt sich ein Bedarf, eine Personentransportanlage mit einer Vorrichtung zur Erfassung von Benutzern auszurüsten. Eine solche Personentransportanlage ist beispielsweise aus der JP 2011 011901 A bekannt. Bei dieser werden mittels an beiden Zutrittsbereichen der Fahrtreppe angeordneten Lichtschranken die auftretenden und abtretenden Benutzer erfasst und aus der Differenz die momentane Belastung des Stufenbandes errechnet. Obwohl aus Redundanzgründen pro Zutrittsbereich vier Lichtschranken verbaut sind, kann die Vorrichtung nicht erkennen, ob nur eine, oder ob zwei Personen nebeneinander, den Zutrittsbereich betritt.

Eine weitere Vorrichtung zur Erfassung von Benutzern ist auch aus der WO 2015/090764 Al bekannt. Bei dieser hat die Vorrichtung die Aufgabe, mittels eines TOF-Sensors (timeof-flight camera) einen Vorraum einer Fahrtreppe zu überwachen. Sobald ein Benutzer diesen Vorraum betritt, wird dessen Bewegungsbild analysiert und entsprechend dieser Analyse der Antrieb des Transportbandes gesteuert.

Personentransportanlagen mit Sensoren der vorgenannten Art erfordern zur Bildanalyse eine Signalauswerteeinheit mit einer hohen Rechnerleistung sowie relativ teure Sensoren, die eine hohe Bildauflösung aufweisen, um zu aussagekräftigen Resultaten zu gelangen. Zudem stossen ab einer gewissen Benutzerdichte diese Systeme an Grenzen, dabei dichtgedrängt sich bewegenden Benutzern deren Grenzen für die Sensoren verwischen und die Benutzer als ein sich bewegender, nahezu homogener Block erscheint.

Hierdurch stellt sich die Aufgabe, eine Personentransportanlage mit einer Vorrichtung und ein Verfahren zur Erfassung von Benutzern mit dieser Vorrichtung bereitzustellen, welche die Verwendung von einfachen und billigen Sensoren ermöglicht, die bei der Auswertung der Sensorsignale eine geringere Rechnerleistung erfordert und die auch bei dichtgedrängten Benutzern eine präzise Zählung der Benutzer erlaubt.

Diese Aufgabe wird gelöst durch eine Personentransportanlage mit einer Vorrichtung zur Erfassung von Benutzern, wobei die Personentransportanlage einen von den Benutzern durchschreitbaren Bereich umfasst. Die Vorrichtung weist zumindest zwei nach dem Prinzip der Laufzeiterfassung arbeitende Sensoren und mindestens eine mit diesen Sensoren verbundene Signalauswerteeinheit auf. Jeder Sensor weist zumindest einen Emitter zur Aussendung elektromagnetischer Wellen in einen Erfassungsbereich und diesem Emitter angrenzend, einen Empfänger zur Erfassung der vom Emitter ausgesendeten und aus dem Erfassungsbereich des Sensors reflektierten elektromagnetischen Wellen auf. Der Emitter und der Empfänger eines jeden Sensors sind in den durchschreitbaren Bereich gerichtet. Der Erfassungsbereich jedes Sensors ist ein dreidimensionaler Raum, der eine Hauptrichtungsachse aufweist.

Mittels der Laufzeiterfassung der Sensoren kann die Anwesenheit eines Benutzers sowie dessen Distanz relativ zum erfassenden Sensor detektiert werden. Aus den ermittelten Distanzen einander gegenüberliegender Sensoren kann die Anzahl gleichzeitig erfasster Benutzer durch eine Auswertung mittels eines Vergleiches der Distanz- Signalverläufe ermittelt werden. Mit anderen Worten kann jede Art von kostengünstigen und einfachen Sensoren eingesetzt werden, solange sie eine Distanz zu einem vorbeigehenden Benutzer oder Objekt messen können. Deren Distanz-Signalverläufe können, wie weiter Unten in Zusammenhang mit den Figuren beschrieben, dahingehend ausgewertet werden, ob nur ein Benutzer oder zwei nebeneinander gehende Benutzer gleichzeitig den Zutrittsbereich betreten. Hierzu sind auch keine aufwändigen Bildverarbeitungsprogramme und damit auch nicht höhere Rechner- und Datenspeicherressourcen erforderlich.

Üblicherweise ist der Erfassungsbereich eines Sensors ein dreidimensionaler, kegelförmiger Raum, der eine Kegelachse aufweist. Anders ausgedrückt, kann der Erfassungsbereich ein rotationssymmetrischer kegelförmiger dreidimensionaler Raum sein, dessen Kegelachse die optische Achse des Empfängers ist. Da es viele verschiedene Sensortypen gibt, die mit der Laufzeiterfassung arbeiten aber nicht zwingend einer Optik bedürfen, wird anstatt dem Begriff «optische Achse» der breitere Begriff «Hauptrichtungsachse» verwendet.

Anders ausgedrückt ist der Erfassungsbereich durch eine Hauptrichtungsachse charakterisiert, wobei die in den Erfassungsbereich emittierten elektromagnetischen Wellen des Emitters von vorhandenen Oberflächen im Erfassungsbereich reflektiert und vom Empfänger erfasst werden können. Da bei der vorliegenden Erfindung nur das Distanzsignal von Interesse ist, können als Sensoren nicht nur die immer noch recht teuren TOF-Kameras mit Bildaufbereitungssoftware eingesetzt werden, sondern auch sehr kostengünstige Sensoren, die lediglich auf einer Linie im Raum; genauer auf der Hauptrichtungsachse; eine Distanz zu Oberflächen im durchschreitbaren Bereich kontinuierlich oder periodisch vermessen und diese als Signal beziehungsweise Signalverlauf an die Signalauswerteeinheit übertragen.

Erfindungsgemäss ist an einander gegenüberliegenden Seiten des durchschreitbaren Bereiches jeweils mindestens ein Sensor der Vorrichtung angeordnet, wobei die Hauptrichtungsachsen der Erfassungsbereiche der Sensoren parallel zueinander und orthogonal zur Längserstreckung des durchschreitbaren Bereiches angeordnet sind.

Ein besonderer Vorteil der vorgenannten Ausrichtung der Hauptrichtungsachsen der Sensoren zueinander und zur Längserstreckung des durchschreitbaren Bereiches liegt in der sehr einfachen, funktionssicheren und schnellen Auswertung der Sensorsignale, da durch die Parallelität und Orthogonalität die Signalverläufe der Sensoren nicht oder kaum in Relation zueinander korrigiert werden müssen, um beispielsweise zu den weiter unten beschriebenen Vergleichen von Signalmustern zu gelangen.

Aufgrund der vorgenannten Anordnung können die beiden einander gegenüberliegenden Sensoren ein im durchschreitbaren Bereich anwesender Benutzer zumindest teilweise gleichzeitig erfassen. Hierbei wird insbesondere durch die Laufzeitmessung auch die jeweilige Distanz vom durchschreitenden und/oder durchfahrenden Benutzer zum jeweiligen Sensor erfasst. Die über die Zeit erfassten Distanzen ergeben einen Signalverlauf der Sensoren, der viel einfacher auszuwerten ist, als beispielsweise durch eine Kamera erfasste Bilder, die zum Beispiel mittels eines 3D-fähigen Bildverarbeitungsprogrammes verarbeitet werden müssen. Dem entsprechend sind zur Auswertung deutlich weniger Rechenleistung und Datenspeicherressourcen erforderlich, so dass die Auswertung des einfachen Distanz-Signalverlaufs beziehungsweise Sensorsignals blitzschnell erfolgen kann.

Um eine kompakte Blockbildung von Benutzern zu vermeiden, kann die Breite des von den Benutzern durchschreitbaren Bereiches der Personentransportanlage im Bereich der Sensoren auf zwei nebeneinanderstehende Benutzer begrenzt sein.

Die vorgenannte Personentransportanlage kann beispielsweise eine Fahrtreppe oder ein Fahrsteig sein, wobei der durchschreitbare Bereich seitlich durch Balustraden begrenzt ist und die Sensoren an oder in diesen Balustraden angeordnet sind. Die Balustraden können hierbei einen umlaufend angeordneten Handlaufriemen aufweisen. Die Balustraden erstrecken sich seitlich entlang eines Transportbandes mit Stufen oder Paletten, welches zur Beförderung der Benutzer umlaufend im durchschreitbaren Bereich angeordnet ist. Die Balustraden können aber auch den, mit dem umlaufenden Handlauf versehenen Balustraden vorgelagerte Einrichtungen wie Pfosten, Stehlen oder Geländer sein, die der Einweisung der Benutzer in die Fahrtreppe oder in den Fahrsteig dienen.

Die Personentransportanlage kann aber auch ein Aufzug sein. Hier ist der durchschreitbare Bereich seitlich durch einen Schachttürrahmen und/oder einen Kabinentürrahmen des Aufzugs begrenzt. Vorzugsweise werden die Sensoren an oder in diesen Türrahmen angeordnet.

Je nach Anordnung der beiden Sensoren muss die Erfassung der Sensorsignale beziehungsweise die Arbeitsweise der Sensoren auf die spezifische Anordnung abgestimmt werden. Beispielsweise können die Erfassungsbereiche einander gegenüberliegend angeordneter Sensoren zueinander deckungsgleich positioniert sein. Damit sie sich nicht gegenseitig stören, kann die Emittierung von elektromagnetischen Wellen durch die Emitter der Sensoren zueinander zeitlich versetzt sein.

Eine weitere Möglichkeit besteht darin, dass die Erfassungsbereiche einander gegenüberliegend angeordneter Sensoren zueinander versetzt positioniert sind und die Emittierung von elektromagnetischen Wellen durch die Emitter der Sensoren zeitgleich erfolgt.

In einer weiteren Variante können die Erfassungsbereiche einander gegenüberliegend angeordneter Sensoren zueinander deckungsgleich positioniert sein und die Emittierung von elektromagnetischen Wellen durch die Emitter der Sensoren zeitgleich erfolgen. Hierbei ist es aber erforderlich, dass sich die elektromagnetischen Wellen in der Frequenz voneinander unterscheiden und die Empfänger entsprechend der zu empfangenden Frequenz abgestimmte Filter aufweisen.

Wie bereits erwähnt, werden die von zwei gegenüberliegend angeordneten Sensoren erfassten Laufzeiten der von den Sensoren emittierten und wieder empfangenen elektromagnetischen Wellen als Sensorsignale an die Signalauswerteeinheit weitergeleitet. In der Signalauswerteeinheit können die durch den Signalverlauf entstehenden Signalmuster in Relation zu einem Grundsignal analysiert werden, indem aus den ermittelten Distanzen einander gegenüberliegender Sensoren die Anzahl gleichzeitig erfasster Benutzer durch eine Auswertung mittels eines Vergleiches der Distanz-Signalverläufe ermittelt werden können, und wobei in Abhängigkeit der analysierten Signalmuster ein Zählerwert einer Zähleinheit der Signalauswerteeinheit verändert wird.

Dies kann beispielsweise dadurch erreicht werden, dass die Analyse der Signalmuster durch Vergleich der an- und/oder absteigenden Abschnitte der beiden Signalverläufe mit einem oberen Schwellbereich, mit einem mittleren Schwellbereich und mit einem unteren Schwellbereich, ausgehend vom Grundsignal, verglichen werden. Mit anderen Worten werden diejenigen Abschnitte des Signalverlaufs betrachtet, die ein Eindringen in einen Schwellbereich erwirken. Da je nach Signalverlauf der mittlere Schwellbereich bis zum unteren Schwellbereich durchdrungen wird, wartet vorzugsweise die Signalauswerteeinheit den ansteigenden Abschnitt ab, bis der Zählerwert entsprechend dem erreichten Schwellbereich bestimmt wird.

In einer Ausführung der Erfindung kann der Zählerwert der Zähleinheit in Abhängigkeit des Vergleichs:
- um eins erhöht werden, wenn das erste der beiden Sensorsignale den oberen Schwellbereich erreicht und das zweite der beiden Sensorsignale den mittleren oder unteren Schwellbereich erreicht;
- um eins erhöht werden, wenn das erste und das zweite Sensorsignal den mittleren Schwellbereich erreichen; oder
- um zwei erhöht werden, wenn das erste und das zweite Sensorsignal den unteren Schwellbereich erreichen.

In einer weiteren Ausführung der Erfindung kann in der Signalauswerteeinheit ein Mustererkennungsalgorithmus ausgeführt werden, mittels dem die durch den Signalverlauf entstehenden Signalmuster zweier einander gegenüberliegend angeordneter Sensoren in Relation zum Grundsignal analysiert werden. Ein solcher Mustererkennungsalgorithmus vergleicht durch Abschnitte des Grundsignals begrenzte Signalverlaufs-Abschnitte mit einem bestimmten, hinterlegten Signalmuster. Diesem hinterlegten Signalmuster ist ein Zahlenwert zugeordnet. Um diesen Zahlenwert wird anschliessend der Zählerwert der Zähleinheit erhöht. Es ist offensichtlich, dass aufgrund der Geschwindigkeit, mit der die Benutzer die Sensoren passieren, sowie durch die Form der Benutzer selbst, sehr viele verschiedene Muster vorhanden sind. Um diese Vielfalt abzudecken, können diese Muster durch einen maschinellen Lernalgorithmus analysiert werden. Der Mustererkennungsalgorithmus kann ähnlich konzipiert sein wie Algorithmen, die für die optische Zeichenerkennung (OCR) verwendet werden.

Des Weiteren kann in der Signalauswerteeinheit auch ein Mustervergleichsalgorithmus ausgeführt werden. Bei einer Abweichung des Signalverlaufs-Abschnitts von den bereits hinterlegten Signalmustern kann der abweichende Signalverlaufs-Abschnitt ebenfalls als Signalmuster hinterlegt werden. Diesem Signalmuster wird anschliessend ein Zahlenwert zugeordnet, so dass bei einer neuerlichen Übereinstimmung mit dem Signalverlauf dieser Zahlenwert verwendet wird, um den Zählerwert der Zähleinheit zu erhöhen.

Periodisch können beispielsweise aus Versuchen ermittelte Verschleisswerte dem vorhandenen Zählerwert zugrunde gelegt werden, so dass aus dem vorhandenen Zählerwert beispielsweise die Restlebensdauer von Verschleissteilen wie Lager, Rollen, Ketten, Riemen, Führungen und dergleichen mehr, der jeweiligen Personentransportanlage ermittelt werden kann.

Personentransportanlagen mit einer Vorrichtung zur Erfassung von Benutzern sowie ein Verfahren zur Erfassung von Benutzern dieser Personentransportanlage mit der entsprechenden Vorrichtung werden nachfolgend anhand von Beispielen und mit Bezugnahme auf die Zeichnungen näher erläutert, wobei bei allen Figuren für gleiche Bauteile durchgehend die gleichen Bezugszeichen verwendet werden. Darin zeigen:
- Figur 1:: in schematischer, dreidimensionaler Ansicht eine als Fahrtreppe ausgestaltete Personentransportanlage mit in den Balustraden angeordneten Sensoren der Vorrichtung;
- Figur 2:: in schematischer, dreidimensionaler Ansicht eine Schachttür einer als Aufzug ausgestalteten Personentransportanlage mit im Türrahmen angeordneten Sensoren der Vorrichtung;
- Figur 3A:: in schematischer Draufsicht die in der Figur 1 dargestellte Fahrtreppe mit Benutzern;
- Figur 3B:: in schematischer Ansicht der jeweilige Signalverlauf der Sensoren der Vorrichtung in Abhängigkeit der Positionen der in der Figur 3A dargestellten Benutzer im durchschreitbaren Bereich, sowie Zähleinheiten einer Signalauswerteeinheit der Vorrichtung.

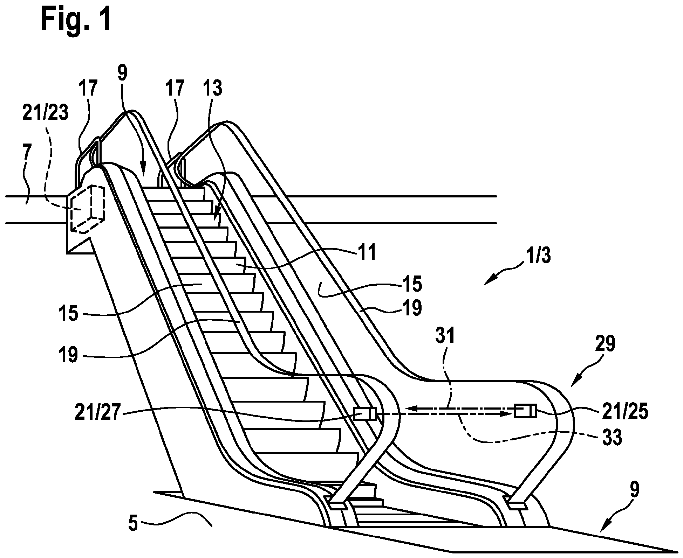

Die Figur 1 zeigt in schematischer, dreidimensionaler Ansicht eine als Fahrtreppe 3 ausgestaltete Personentransportanlage 1. Diese verbindet ein unteres Stockwerk 5 eines Gebäudes mit einem oberen Stockwerk 7 des Gebäudes. Die Fahrtreppe 3 weist auf jedem der Stockwerke 5, 7 jeweils einen Antrittsbereich 9 auf. Zwischen den Antrittsbereichen 9 erstreckt sich ein umlaufend angeordnetes Transportband 11. Sowohl die Antrittsbereiche 9 als auch das Transportband 11 sind begehbar und gehören somit zu einem durchschreitbaren Bereich 13, der zu beiden seiner Längsseiten mittels Balustraden 15 begrenzt ist. Diese Balustraden 15 weisen einen umlaufenden Handlauf 19 auf, dessen Umlaufgeschwindigkeit auf die Umlaufgeschwindigkeit des Transportbandes 11 abgestimmt ist. Im oberen Stockwerk 7 schliessen den Balustraden 15 zudem zwei Geländer 17 an, so dass der durchschreitbare Bereich 13 um diese Geländer 17 verlängert ist.

Die Personentransportanlage 1 der Figur 1 ist mit einer Vorrichtung 21 zur Erfassung von Benutzern ausgerüstet. Diese Vorrichtung 21 weist insbesondere eine Signalauswerteeinheit 23 sowie mindestens zwei einander gegenüberliegend angeordnete Sensoren 25, 27 auf. Im vorliegenden Ausführungsbeispiel ist jeweils einer der Sensoren 25, 27 in einem Umlenkbereich 29 des Handlaufs 19 angeordnet. Wie anhand des strichpunktierten und strichdoppelpunktierten Pfeils ersichtlich ist, weisen die beiden Sensoren 25, 27 jeweils eine Hauptrichtungsachse 31, 33 auf. Die beiden Sensoren 25, 27 sind in den Balustraden 15 derart ausgerichtet angeordnet, dass deren Hauptrichtungsachsen 31, 33 parallel zueinander und orthogonal zur Längserstreckung des durchschreitbaren Bereichs 13 angeordnet sind. Selbstverständlich könnten auch im Antrittsbereich 9 des oberen Stockwerkes 7 zwei Sensoren 25, 27 angeordnet sein, beispielsweise ebenfalls in den Balustraden 15, aber auch in den beiden Geländern 17. Wie bereits beschrieben, müssen auch diese paarweise angeordneten Sensoren 25, 27 erfindungsgemäss zueinander ausgerichtet sein.

Aus Übersichtlichkeitsgründen sind keine Verbindungsleitungen und Verbindungsmittel zwischen der Signalauswerteeinheit 23 und den Sensoren 25, 27 dargestellt. Die Versorgung mit elektrischer Energie und die verschiedensten Arten drahtgebundener oder drahtloser Signalübertragungen sind hinlänglich bekannt und werden deshalb nicht speziell gezeigt und beschrieben.

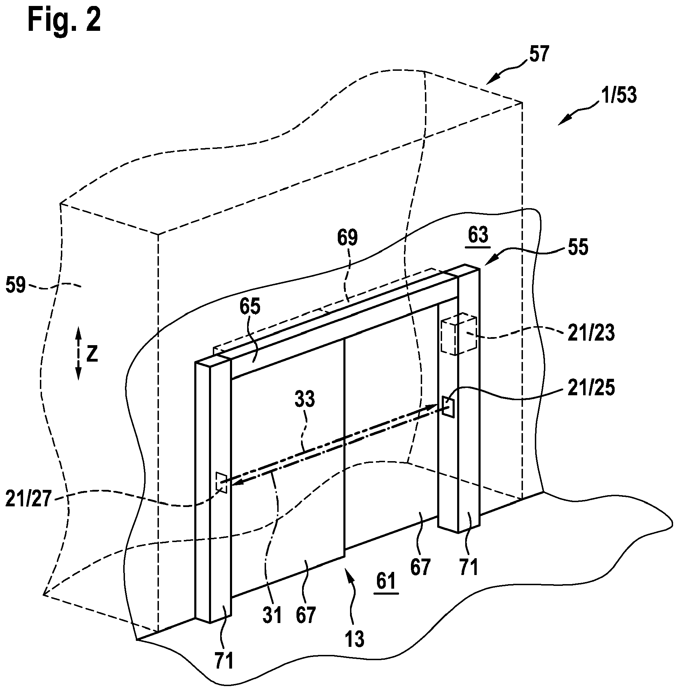

Die Figur 2 zeigt in schematischer, dreidimensionaler Ansicht ein Teil eines Stockwerks 61 eines mehrstöckigen Gebäudes 63. In der Wand des Gebäudes 63 ist eine Schachttür 55 eingelassen, die Teil einer als Aufzug 53 ausgestalteten Personentransportanlage 1 ist.

Die Schachttür 55 schliesst einen Aufzugsschacht 57 des mehrstöckigen Gebäudes 63 gegenüber dem Stockwerk 61 ab. Hinter der Schachttür 55 ist mittels unterbrochener Linie teilweise eine Aufzugskabine 59 angedeutet, die im Aufzugsschacht 57 in vertikaler Richtung Z verfahren werden kann. Auf die Darstellung weiterer Elemente des Aufzugs 53, insbesondere auf weitere Stockwerke 61 und dort vorhandene Schachttüren 55 wird verzichtet, da für die Erfassung von Benutzern lediglich die Anordnung der Elemente der bereits in Zusammenhang mit der Figur 1 beschriebenen Vorrichtung 21 zur Erfassung von Benutzern im Bereich der Schachttür 55 von Belang ist.

Die Schachttür 55 weist einen Türrahmen 65 auf, in dem zwei Türblätter 67 beweglich angeordnet sind. Die Türblätter 67 können in bekannter Weise mit einem nicht dargestellten Türantrieb gekoppelt sein. Wie seit Jahren im Aufzugsbau üblich, kann zudem die Aufzugskabine 59 die mit unterbrochener Linie angedeutet dargestellte Kabinentür 69 und einen Türantrieb aufweisen. Bei solchen Aufzügen 53 werden die Türblätter 67 der Schachttüren 55 mit den Kabinentüren 69 zwecks Öffnen und Schliessen temporär gekoppelt. Bei geöffneter Schachttür 55 begrenzt der Türrahmen 65 den durchschreitbaren Bereich 13.

Wie in der Figur 2 dargestellt, ist die Vorrichtung 21 zur Erfassung von Benutzern im Türrahmen 65 angeordnet. Die mit unterbrochener Linie angedeutete Signalauswerteeinheit 23 ist in einer Kavität des Türrahmens 65 untergebracht. Die beiden Sensoren 25, 27 sind einander gegenüberliegend in den beiden Türpfosten 71 des Türrahmens 65 eingepasst, wobei auch hier deren Hauptrichtungsachsen 31, 33 parallel zueinander und orthogonal zur Längserstreckung des durchschreitbaren Bereichs 13 angeordnet sind. Wenn, wie im vorliegenden Beispiel die Sensoren 25, 27 im Türrahmen 65 der Schachttür 55 angeordnet sind, ist vorzugsweise jeder Türrahmen 65 jedes Stockwerks 61 mit Sensoren 25, 27 ausgerüstet. Die Signalauswerteeinheit 23 kann auch in einem oder in beiden Sensoren 25, 27 untergebracht sein, wobei ein Datenaustausch zwischen den Sensoren 25, 27 vorhanden sein muss. Die Signalauswerteeinheit 23 kann selbstverständlich auch zentral aufgesetzt sein, beispielsweise in einer nicht dargestellten Steuerung der Personentransportanlage 1, so dass alle Sensoren 25, 27 der Vorrichtung 21 ihre Signale an diese eine Signalauswerteeinheit 23 übertragen.

Selbstverständlich können die Sensoren 25, 27 und die Signalauswerteeinheit 23 auch in der Aufzugskabine 59 untergebracht sein, wobei die Sensoren 25, 27 gattungsgemäss im Bereich der Kabinentür 69 angeordnet werden, um den durchschreitbaren Bereich 13 zu überwachen, der durch die geöffnete Kabinentür 69 seitlich begrenzt wird.

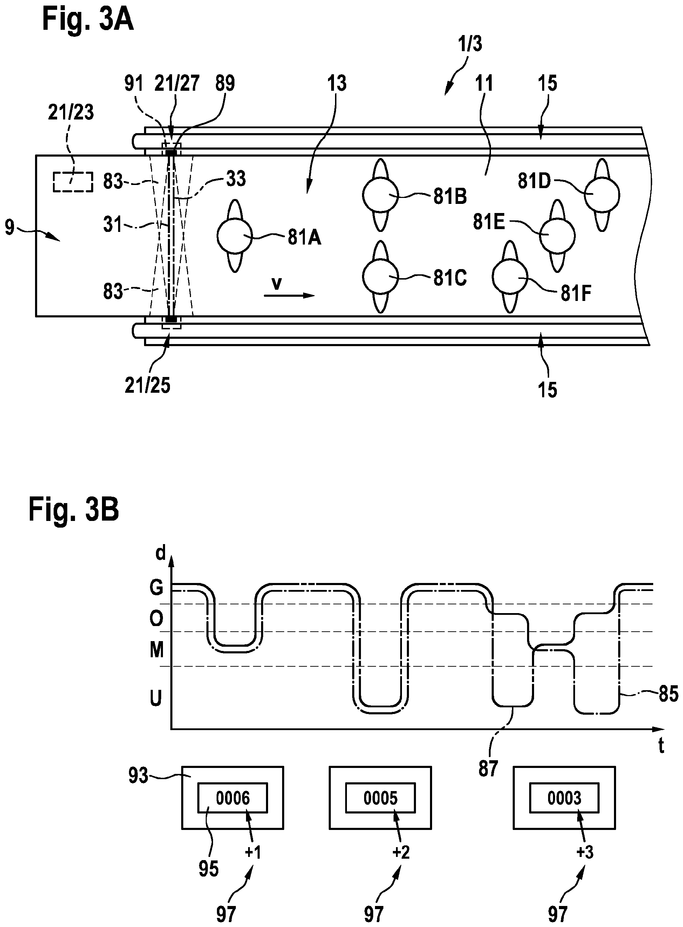

Die von der Signalauswerteeinheit 23 ermittelten Daten können beispielsweise an die Steuerung der Personentransportanlage 1 weitergeleitet und dort weiterverarbeitet werden. So können in Abhängigkeit der ausgewerteten Sensorsignale 85, 87 (siehe Figur 3B) auch gewisse Steuerungsschritte durch die Steuerung der Personentransportanlage 1 vorgenommen werden. Zum Beispiel kann bei einem Aufzug 53 die Steuerung in Abhängigkeit der zugestiegenen Benutzer und damit der zu befördernden Last, das Beschleunigungsprofil und Verzögerungsprofil des nicht dargestellten Aufzugantriebes anpassen.

Auch bei einer als Fahrtreppe 3 oder Fahrsteig ausgestalteten Personentransportanlage 1 können die von der Signalauswerteeinheit 23 ermittelten Daten die Steuerungsschritte der Steuerung beeinflussen, so dass beispielsweise bei einem übermässigen Ansturm von Benutzern ein akustisches Warnsignal ausgegeben wird oder die Fahrgeschwindigkeit des Transportbandes 11 gedrosselt wird.

Die von der Signalauswerteeinheit 23 ermittelten Daten können aber beispielsweise auch über einen Internetanschluss an einen zentralen Rechner des Betreibers der Personentransportanlage 1, an das mit der Wartung beauftragte Unternehmen oder an ein virtuelles Computernetzwerk (Cloud) übermittelt und durch diese ausgewertet werden. Besonders interessant ist die Einbindung der Daten in eine digitale Abbildung (Digital Twin) der Personentransportanlage 1, so dass mittels der erfassten Benutzer unter Zuhilfenahme einer Normmasse des Benutzers (üblicherweise 85kg) Belastungssimulationen und damit Verschleisssimulationen mit der digitalen Abbildung als Simulationsumgebung durchgeführt werden können.

Nachfolgend werden die Figuren 3A und 3B gemeinsam beschrieben, wobei die Figur 3A in schematischer Draufsicht die in der Figur 1 dargestellte Fahrtreppe 3 mit Benutzern 81A - 81F zeigt.

In der Figur 3B ist in schematischer Ansicht der jeweilige Signalverlauf der Sensorsignale 85, 87 dargestellt, die von den Sensoren 25, 27 der Vorrichtung 21 erfasst und an die Signalauswerteeinheit 23 weitergeleitet wurden. Dabei ändert sich der Signalverlauf der Sensorsignale 85, 87 in Abhängigkeit der Distanz der Benutzer 81A - 81F im durchschreitbaren Bereich 13 zu den Sensoren 25, 27, wie sie in der Figur 3A dargestellt sind.

Da die Sensoren 25, 27 nach dem Prinzip der Laufzeiterfassung arbeiten, repräsentieren die Sensorsignale 85, 87 die gemessenen Distanzen zu den in den Erfassungsbereichen 83 der Sensoren 25, 27 erfassbaren Oberflächen. Jeder Sensor 25, 27 weist zumindest einen Emitter 91 zur Aussendung elektromagnetischer Wellen in den Erfassungsbereich 83 und diesem Emitter 91 angrenzend, einen Empfänger 89 zur Erfassung der vom Emitter 91 ausgesendeten und aus dem Erfassungsbereich 83 des Sensors 25, 27 reflektierten elektromagnetischen Wellen auf. Der Emitter 91 und der Empfänger 89 eines jeden Sensors 25, 27 sind in den durchschreitbaren Bereich 13 gerichtet.

Der mit gepunkteter Linie dargestellte Erfassungsbereich 83 jedes Sensors 25, 27 ist ein dreidimensionaler, kegelförmiger Raum, der eine Kegelachse aufweist. Anders ausgedrückt, kann der Erfassungsbereich 83 ein rotationssymmetrischer kegelförmiger dreidimensionaler Raum sein, dessen Kegelachse die optische Achse des Empfängers 89 ist. Da es viele verschiedene Sensortypen gibt die mit der Laufzeiterfassung arbeiten aber nicht zwingend einer Optik bedürfen, wird anstatt dem Begriff «optische Achse» der breitere Begriff Hauptrichtungsachse 31, 33 verwendet.

Anders ausgedrückt, ist der Erfassungsbereich 83 durch eine Hauptrichtungsachse 31, 33 charakterisiert, wobei die in den Erfassungsbereich 83 emittierten elektromagnetischen Wellen des Emitters 91 von vorhandenen Oberflächen im Erfassungsbereich 83 reflektiert und vom Empfänger 89 erfasst werden können.

Konkret kann der Sensor 25, 27 beispielsweise eine 3D-Kamera sein. Als 3D-Kamera kann eine Kamera verwendet werden, die auf dem Prinzip der Lichtlaufzeitmessung ("Time of Flight") beruht. Die 3D-Kamera umfasst als Emitter 91 eine Leuchtdioden- oder Laserdioden-Einheit, die zum Beispiel Licht im infraroten Bereich aussendet, wobei das Licht in kurzen Impulsen (z. B. mehrere 10 Nanosekunden lang) emittiert wird. Die 3D-Kamera umfasst zudem als Empfänger 89 eine Photozellen-Gruppe aus einer Anzahl von lichtempfindlichen Elementen. Die Photozellen-Gruppe ist mit einem Verarbeitungschip (z.B. ein CMOS Sensorchip) verbunden, der die Laufzeit des emittierten Lichtes bestimmt. Der Verarbeitungschip misst in wenigen Millisekunden simultan die Distanz zu einer ganzen Anzahl von Zielpunkten im Raum.

Die 3D-Kamera kann auch auf einem Distanzmessprinzip beruhen, bei dem die Laufzeit von ausgesendetem Licht über die Phase des Lichts erfasst wird. Dabei wird die Phasenlage beim Senden des Lichtes und beim Empfangen verglichen und daraus die verstrichene Zeit bzw. der Abstand zum reflektierenden Objekt ermittelt. Dazu wird vorzugsweise statt kurzen Lichtimpulsen ein moduliertes Lichtsignal emittiert. Weitere Details zu Messprinzipien sind beispielsweise in folgenden Veröffentlichungen angegeben: "Fast Range Imaging by CMOS Sensor Array Through Multiple Double Short Time Integration (MDSI)", P. Mengel et al., Siemens AG, Corporate Technology Department, München, Deutschland, und "A CMOS Photosensor Array for 3D Imaging Using Pulsed Laser", R. Jeremias et al., 2001 IEEE International Solid-State Circuits Conference, Seite 252. Der Fachmann erkennt, dass alternativ zu einer solchen 3D-Kamera auch eine andere Einrichtung zur Bestimmung des Objektabstands verwendet werden kann, beispielsweise eine Einrichtung, die auf elektromagnetischen Wellen im Funkwellenlängenbereich (Radar) basiert.

Wie bereits Eingangs beschrieben, sollen möglichst kostengünstige Sensoren 25, 27 verwendet werden. Da lediglich die Distanz zu Oberflächen von Interesse ist, genügt bereits eine Photozelle als Empfänger 89. Dem entsprechend wird quasi nur ein Bildpunkt ausgewertet, was zu einer erheblichen Reduktion zu verarbeitender Daten und damit den Einsatz kostengünstiger Sensoren 25, 27 und Signalauswerteeinheiten 23 ermöglicht. Ferner führt diese Reduktion der Datenmenge zu einer wesentlich höheren Verarbeitungsgeschwindigkeit innerhalb der ganzen Vorrichtung 21 zur Erfassung von Benutzern 81A - 81F. Das bedeutet, dass als Sensoren 25, 27 nicht nur die immer noch recht teuren TOF-Kameras mit Bildaufbereitungssoftware eingesetzt werden können, sondern auch sehr kostengünstige Sensoren 25, 27, die lediglich auf einer Linie im Raum, genauer auf der Hauptrichtungsachse 31, 33 eine Distanz zu Oberflächen im durchschreitbaren Bereich 13 kontinuierlich oder periodisch vermessen und diese als Sensorsignal 85, 87 beziehungsweise Signalverlauf an die Signalauswerteeinheit 23 übertragen.

Da erfindungsgemäss an einander gegenüberliegenden Seiten des durchschreitbaren Bereiches 13 jeweils mindestens ein Sensor 25, 27 der Vorrichtung 21 angeordnet ist und die Hauptrichtungsachsen 31, 33 der Erfassungsbereiche 83 der Sensoren 25, 27 parallel zueinander und orthogonal zur Längserstreckung des durchschreitbaren Bereiches 13 angeordnet sind, können die Signalverläufe der Sensorsignale 85, 87 wie in der Figur 3B dargestellt, problemlos in der Signalauswerteeinheit 23 verarbeitet und miteinander verglichen werden. Dies deshalb, weil durch diese spezifische Ausrichtung der Sensoren 25, 27 die Signalverläufe der Sensoren 25, 27 nicht oder kaum in Relation zueinander korrigiert werden müssen, um beispielsweise zu den weiter unten beschriebenen Vergleichen zu gelangen.

Je nach Anordnung der beiden Sensoren 25, 27 muss die Erfassung der Sensorsignale 85, 87 beziehungsweise die Arbeitsweise der Sensoren 25, 27 auf die spezifische Anordnung abgestimmt werden. Beispielsweise können die Erfassungsbereiche 83 einander gegenüberliegend angeordneter Sensoren 25, 27 zueinander deckungsgleich positioniert sein. Damit sie sich nicht gegenseitig stören, kann die Emittierung von elektromagnetischen Wellen durch die Emitter 91 der Sensoren 25, 27 zueinander zeitlich versetzt sein.

Eine weitere Möglichkeit besteht darin, dass die Erfassungsbereiche 83 einander gegenüberliegend angeordneter Sensoren 25, 27 räumlich zueinander versetzt positioniert sind und die Emittierung von elektromagnetischen Wellen durch die Emitter 91 der Sensoren 25, 27 zeitgleich erfolgt.

In einer weiteren Variante können die Erfassungsbereiche 83 einander gegenüberliegend angeordneter Sensoren 25, 27 zueinander deckungsgleich positioniert sein und die Emittierung von elektromagnetischen Wellen durch die Emitter 91 der Sensoren 25, 27 zeitgleich erfolgen. Hierbei ist es aber erforderlich, dass sich die elektromagnetischen Wellen in der Frequenz voneinander unterscheiden und die Empfänger 89 entsprechend der zu empfangenden Frequenz abgestimmte Filter aufweisen.

Aufgrund einer der vorgenannten Ausführungsvarianten können die beiden einander gegenüberliegenden Sensoren 25, 27 einen oder mehrere im durchschreitbaren Bereich 13 anwesende Benutzer 81A - 81F zumindest teilweise gleichzeitig erfassen. Hierbei wird insbesondere durch die Laufzeitmessung die jeweilige Distanz vom durchschreitenden Benutzer zum jeweiligen Sensor 25, 27 erfasst. Die über die Laufzeit erfassten Distanzen ergeben einen Signalverlauf der Sensoren 25, 27, der viel einfacher auszuwerten ist, als beispielsweise durch eine Kamera erfasste Bilder, welche zum Beispiel mittels eines 3D-fähigen Bildverarbeitungsprogrammes verarbeitet werden müssen. Dem entsprechend sind zur Auswertung deutlich weniger Rechenleistung und Datenspeicherressourcen erforderlich, so dass die Auswertung des einfachen Distanz-Signalverlaufs blitzschnell erfolgen kann.

Wie bereits erwähnt, werden die von zwei gegenüberliegend angeordneten Sensoren 25, 27 erfassten Laufzeiten der von den Sensoren 25, 27 emittierten und wieder empfangenen elektromagnetischen Wellen als Sensorsignale an die Signalauswerteeinheit weitergeleitet. Ob die Sensorsignale 85, 87 hierbei nun als Laufzeit, als Distanzwert, als Zahleneinheit oder dergleichen mehr weitergeleitet wird, ist hierbei unerheblich. Wichtig ist lediglich, dass Änderungen im Signalverlauf der Sensorsignale 85, 87 und eine Grössenordnung der Änderung (Höhe der Amplitude) erfassbar ist und weitergeleitet wird. In der Signalauswerteeinheit 23 können die durch den Signalverlauf entstehenden Signalmuster in Relation zu einem Grundsignal G analysiert werden, wobei in Abhängigkeit der analysierten Signalmuster ein Zählerwert 93 einer in der Figur 3B symbolisch dargestellten Zähleinheit 91 der Signalauswerteeinheit 23 verändert wird.

Die Sensorsignale 85, 87 beziehungsweise Messwerte der Sensoren 25, 27 sind in der Figur 3B im kartesischen Koordinatensystem als Signalverläufe dargestellt, wobei in der Abszissenachse die fortschreitende Zeit t der Sensorsignalerfassung und in der Ordinatenachse die vom Sensor 25, 27 als Sensorsignal 85, 87 ausgegebene, gemessene Distanz d aufgetragen sind. Aus Darstellungsgründen wurden die beiden Signalverläufe der Sensorsignale 85, 87 in der Ordinatenachse zueinander leicht versetzt, da sie sonst über weite Bereiche übereinanderliegen würden. Eine solche Versetzung würde sich beispielsweise auch ergeben, wenn der Benutzer nicht ganz mittig den durchschreitbaren Bereich passiert. Um die Auswertung zu veranschaulichen, sind in der Figur 3A drei charakteristische Fälle von Benutzererfassungen beispielhaft dargestellt.

Wenn sich kein Benutzer 81A - 81F im Erfassungsbereich 83 der einander gegenüberliegend angeordneten Sensoren 25, 27 befindet, messen diese die maximale Distanz d und erzeugen dadurch für jeden Sensor 25, 27 das kontinuierliches Grundsignal G. Sobald ein Benutzer in den Erfassungsbereich gelangt, weichen die Sensorsignale 85, 87 vom Grundsignal G ab.

Der erste Fall einer solchen Erfassung betrifft einen einzelnen Benutzer 81A, der in der Mitte des durchschreitbaren Bereichs 13 auf dem Transportband 11 steht. Wenn er die Erfassungsbereiche der Sensoren 25, 27 mit einer Geschwindigkeit V durchschreitet und/oder durchfährt, ist der Signalverlauf der beiden Sensorsignale 85, 87 genau gleich, wobei deren Amplituden nur bis in einen mittleren Schwellbereich M gelangen. Dem ersten Fall kann nun ein Zählwert 97 «eins» (symbolisch als +1 dargestellt) zugeordnet werden.

Der zweite Fall betrifft zwei Benutzer 81B, 81C, die genau nebeneinander im durchschreitbaren Bereich 13 auf dem Transportband 11 stehen. Wenn diese die Erfassungsbereiche 83 der Sensoren 25, 27 mit einer Geschwindigkeit V durchschreiten und/oder durchfahren, ist auch in diesem Fall der Signalverlauf der beiden Sensorsignale 85, 87 genau gleich, wobei die Amplituden aber bis in einen unteren Schwellbereich U gelangen. Dem zweiten Fall kann nun ein Zählwert 97 «zwei» (symbolisch als +2 dargestellt) zugeordnet werden.

Der dritte Fall betrifft drei Benutzer 81D, 81E, 81F, die gestaffelt und dicht beieinander im durchschreitbaren Bereichs 13 auf dem Transportband 11 stehen. Entsprechend der Staffelung verlaufen die beiden Sensorsignale 85, 87 treppenförmig und invers zueinander durch den oberen Schwellbereich O, den mittleren Schwellbereich M und den unteren Schwellbereich U. Dem dritten Fall kann nun ein Zählwert 97 «drei» (symbolisch als +3 dargestellt) zugeordnet werden. Aus dem dritten Beispiel ist auch ersichtlich, welchen Signalverlauf die Sensorsignale 85, 87 aufweisen, wenn ein einzelner Benutzer 81A - 81F nahe an einer der Balustraden 15 steht.

Diese drei Fälle zusammenfassend kann gesagt werden, dass mittels der Laufzeiterfassung der Sensoren 25, 27 die Anwesenheit eines Benutzers 81A - 81F sowie dessen Distanz d relativ zum erfassenden Sensor 25, 27 detektierbar ist und aus den ermittelten Distanzen d einander gegenüberliegender Sensoren 25, 27 die Anzahl gleichzeitig erfasster Benutzer 81A - 81F durch eine Auswertung mittels eines Vergleiches der Distanz-Signalverläufe ermittelbar ist.

Die vorangehend beschriebenen drei Fälle weisen somit ein charakteristisches, für die entsprechende Aufstellung von Benutzern 81A - 81F auf dem Transportband 11 typisches Signalmuster auf. Es versteht sich von selbst, dass noch eine Vielzahl weitere charakteristische Signalmuster möglich sind, denen ein eindeutiger Zählwert 97 zugeordnet werden kann.

Eine Zuordnung kann beispielsweise dadurch erreicht werden, dass eine Analyse der Signalmuster ausgehend vom Grundsignal G durch einen Vergleich der an- und/oder absteigenden Abschnitte der beiden Sensorsignale 85, 87 mit dem oberen Schwellbereich O, mit dem mittleren Schwellbereich M und mit dem unteren Schwellbereich U erfolgt. Mit anderen Worten werden diejenigen Abschnitte des Signalverlaufs betrachtet, die ein Eindringen in einen der Schwellbereich O, M, U erwirken. Da je nach Signalverlauf der mittlere Schwellbereich M und der untere Schwellbereich U durchdrungen wird, wartet vorzugsweise die Signalauswerteeinheit 23 den ansteigenden Abschnitt ab, bis der Zählerwert 95 entsprechend dem erreichten Schwellbereich O, M, U bestimmt wird.

Zum Beispiel kann der Zählerwert 95 der Zähleinheit 93 in Abhängigkeit des Vergleichs:
- um eins erhöht werden, wenn das erste der beiden Sensorsignale 85, 87 den oberen Schwellbereich O erreicht und das zweite der beiden Sensorsignale 85, 87 den mittleren Schwellbereich M oder unteren Schwellbereich U erreicht;
- um eins erhöht werden, wenn das erste und das zweite Sensorsignal 85, 87 den mittleren Schwellbereich M erreichen; oder
- um zwei erhöht werden, wenn das erste und das zweite Sensorsignal 85, 87 den unteren Schwellbereich U erreichen.

In der Signalauswerteeinheit 23 kann aber auch ein Mustererkennungsalgorithmus ausgeführt werden, mittels dem die durch den Signalverlauf der Sensorsignale 85, 87 entstehenden Signalmuster, voneinander abgegrenzt durch Signalverlaufsabschnitte auf dem Level des Grundsignals G, analysiert werden.

Ein solcher Mustererkennungsalgorithmus vergleicht die identifizierten Signalverlaufsabschnitte mit in einer Datenbank hinterlegten Signalmustern und ordnet das entsprechende hinterlegte Signalmuster dem entsprechenden Signalverlauf- Abschnitt der Sensorsignale 85, 87 zu. Dem hinterlegten Signalmuster ist Zahlenwert 97 zugeordnet. Um diesen Zahlenwert 97 wird nun der Zählerwert 95 der Zähleinheit 93 erhöht. Es ist offensichtlich, dass aufgrund der Geschwindigkeit, mit der die Benutzer die Sensoren 25, 27 passieren, sowie durch die Form der Benutzer selbst, sehr viele verschiedene Signalmuster möglich sind. Um diese Vielfalt abzudecken, können diese Signalmuster durch einen maschinellen Lernalgorithmus analysiert werden. Der Mustererkennungsalgorithmus kann ähnlich konzipiert sein wie Algorithmen, die für die optische Zeichenerkennung (OCR) verwendet werden.

Des Weiteren kann in der Signalauswerteeinheit 23 ein Mustervergleichsalgorithmus ausgeführt, und bei einer Abweichung des Signalmusters von den bereits hinterlegten Signalmustern, das abweichende Signalmuster ebenfalls als Signalmuster hinterlegt werden. Diesem Signalmuster wird anschliessend ein Zahlenwert 97 zugeordnet, so dass bei einer neuerlichen Übereinstimmung mit dem Signalverlauf der Sensorsignale 85, 87 dieser Zahlenwert 97 verwendet wird, um den Zählerwert 95 der Zähleinheit 93 zu erhöhen.

Periodisch können beispielsweise auch aus Versuchen ermittelte Verschleisswerte dem vorhandenen Zählerwert 95 zugrunde gelegt werden, so dass aus dem vorhandenen Zählerwert 95 beispielsweise die Restlebensdauer von Verschleissteilen wie Lager, Rollen, Ketten, Riemen, Führungen und dergleichen mehr der jeweiligen Personentransportanlage 1 ermittelt werden kann.

Um eine kompakte Blockbildung von Benutzern zu vermeiden, kann wie in der Figur 3A schematisch anhand der beiden Benutzer 81B, 81C des zweiten Falles dargestellt, die Breite des von den Benutzern 81A - 81F durchschreitbaren Bereiches 13 der Personentransportanlage 1 im Bereich der Sensoren 25, 27 auf zwei nebeneinanderstehende Benutzer 81A - 81F begrenzt sein.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem entlang des durchschreitbaren Bereiches einer Personentransportanlage 1 mehrere paarweise angeordnete Sensoren 25, 27 vorhanden sind. Zudem sind weitere Anordnungen der Sensoren zueinander möglich, ohne dass sich diese gegenseitig stören.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Personentransportanlage (1) mit einer Vorrichtung (21) zur Erfassung von Benutzern (81A - 81F), wobei die Personentransportanlage (1) einen von den Benutzern (81A - 81F) durchschreitbaren Bereich (13) umfasst und die Vorrichtung (21) zumindest zwei nach dem Prinzip der Laufzeiterfassung arbeitende Sensoren (25, 27) und mindestens eine mit diesen Sensoren (25, 27) verbundene Signalauswerteeinheit (23) aufweist, wobei jeder Sensor (25, 27) zumindest einen Emitter (91) zur Aussendung elektromagnetischer Wellen in einen Erfassungsbereich (83) und diesem Emitter (91) angrenzend, einen Empfänger (89) zur Erfassung der vom Emitter (91) ausgesendeten und aus dem Erfassungsbereich (83) des Sensors (25, 27) reflektierten elektromagnetischen Wellen aufweist, wobei der Emitter (91) und der Empfänger (89) eines jeden Sensors (25, 27) in den durchschreitbaren Bereich (13) gerichtet sind und der Erfassungsbereich (83) jedes Sensors (25, 27) ein, eine Hauptrichtungsachse (31, 33) aufweisender, dreidimensionaler Raum ist, wobei an einander gegenüberliegenden Seiten des durchschreitbaren Bereiches (13) jeweils mindestens ein Sensor (25, 27) der Vorrichtung (21) angeordnet ist und dass die Hauptrichtungsachsen (31, 33) der Erfassungsbereiche (83) der Sensoren (25, 27) parallel zueinander und orthogonal zur Längserstreckung des durchschreitbaren Bereiches (13) angeordnet sind, **dadurch gekennzeichnet, dass** mittels der Laufzeiterfassung der Sensoren (25, 27) die Anwesenheit eines Benutzers (81A - 81F) sowie dessen Distanz (d) relativ zum erfassenden Sensor (25, 27) detektierbar ist und aus den ermittelten Distanzen (d) einander gegenüberliegender Sensoren (25, 27) die Anzahl gleichzeitig erfasster Benutzer (81A - 81F) durch eine Auswertung mittels eines Vergleiches der Distanz-Signalverläufe ermittelbar ist.

2. Personentransportanlage (1) nach Anspruch 1 wobei die Breite des von den Benutzern (81A - 81F) durchschreitbaren Bereiches (13) der Personentransportanlage (1) im Bereich der Sensoren (25, 27) auf zwei nebeneinanderstehende Benutzer (81A - 81F) begrenzt ist.

3. Personentransportanlage (1) nach Anspruch 1 oder 2 wobei die Personentransportanlage (1) eine Fahrtreppe (3) oder ein Fahrsteig ist, der durchschreitbare Bereich (13) seitlich durch Balustraden (15) begrenzt ist und die Sensoren (25, 27) an oder in diesen Balustraden (15) angeordnet sind.

4. Personentransportanlage (1) nach Anspruch 1 oder 2 wobei die Personentransportanlage (1) ein Aufzug (53) ist, der durchschreitbare Bereich (13) seitlich durch einen Schachttürrahmen (65) und/oder einen Kabinentürrahmen des Aufzugs (53) begrenzt ist und die Sensoren (25, 27) an oder in diesen Türrahmen (65) angeordnet sind.

5. Personentransportanlage (1) nach einem der Ansprüche 1 bis 4, wobei die Erfassungsbereiche (83) einander gegenüberliegend angeordneter Sensoren (25, 27) zueinander deckungsgleich positioniert sind und die Emittierung von elektromagnetischen Wellen durch die Emitter (91) der Sensoren (25, 27) zueinander zeitlich versetzt sind.

6. Personentransportanlage (1) nach einem der Ansprüche 1 bis 4, wobei die Erfassungsbereiche (83) einander gegenüberliegend angeordneter Sensoren (25, 27) zueinander versetzt positioniert sind und die Emittierung von elektromagnetischen Wellen durch die Emitter (91) der Sensoren (25, 27) zeitgleich erfolgt.

7. Personentransportanlage (1) nach einem der Ansprüche 1 bis 4, wobei die Erfassungsbereiche (83) einander gegenüberliegend angeordneter Sensoren (25, 27) zueinander deckungsgleich positioniert sind und die Emittierung von elektromagnetischen Wellen durch die Emitter (91) der Sensoren (25, 27) zeitgleich erfolgt, wobei sich die elektromagnetischen Wellen in der Frequenz voneinander unterscheiden und die Empfänger (89) entsprechend der zu empfangenden Frequenz abgestimmte Filter aufweisen.

8. Verfahren zur Erfassung von Benutzern (81A - 81F) einer Personentransportanlage (1) mit einer Vorrichtung (21) nach einem der Ansprüche 1 bis 7, **dadurch gekennzeichnet, dass** die von zwei gegenüberliegend angeordneten Sensoren (25, 27) erfassten Laufzeiten der von den Sensoren (25, 27) emittierten und wieder empfangenen elektromagnetischen Wellen als Sensorsignale (85, 87) an die Signalauswerteeinheit (23) weitergeleitet werden und in der Signalauswerteeinheit (23) die durch den Signalverlauf der Sensorsignale (85, 87) entstehenden Signalmuster in Relation zu einem Grundsignal (G) analysiert werden, indem aus den ermittelten Distanzen (d) einander gegenüberliegender Sensoren (25, 27) die Anzahl gleichzeitig erfasster Benutzer (81A - 81F) durch eine Auswertung mittels eines Vergleiches der Distanz-Signalverläufe ermittelt werden können, und wobei in Abhängigkeit der analysierten Signalmuster ein Zählerwert (95) einer Zähleinheit (93) der Signalauswerteeinheit (23) verändert wird.

9. Verfahren nach Anspruch 8, wobei die Analyse der Signalmuster durch Vergleich der ansteigenden und/oder absteigenden Abschnitte der beiden Signalverläufe mit einem oberen Schwellbereich (O), mit einem mittleren Schwellbereich (M) und mit einem unteren Schwellbereich (U), ausgehend vom Grundsignal (G), verglichen werden.

10. Verfahren nach Anspruch 9, wobei der Zählerwert (95) der Zähleinheit (93) in Abhängigkeit des Vergleichs:
• um eins erhöht wird, wenn das erste der beiden Sensorsignale (83, 85) den oberen Schwellbereich (O) erreicht und das zweite der Sensorsignale (83, 85) den mittleren Schwellbereich (M) oder unteren Schwellbereich (U) erreicht;
• um eins erhöht wird, wenn das erste und das zweite Sensorsignal (83, 85) den mittleren Schwellbereich (M) erreichen;
• um zwei erhöht wird, wenn das erste und das zweite Sensorsignal (83, 85) den unteren Schwellbereich (U) erreichen.

11. Verfahren nach Anspruch 8, wobei in der Signalauswerteeinheit (23) ein Mustererkennungsalgorithmus ausgeführt wird, mittels dem die durch den Signalverlauf der Sensorsignale (83, 85) entstehenden Signalmuster zweier einander gegenüberliegend angeordneter Sensoren (25, 27) in Relation zu einem Grundsignal (G) analysiert und das Analyseergebnis eines bestimmten, hinterlegten Signalmusters einem Zahlenwert (97) zugeordnet wird und um welchen Zahlenwert (97) der Zählerwert (95) der Zähleinheit (93) erhöht wird.

12. Verfahren nach Anspruch 11, wobei in der Signalauswerteeinheit (23) ein Mustervergleichsalgorithmus ausgeführt wird und bei einer Abweichung des Signalmusters von den bereits hinterlegten Signalmustern das abweichende Signalmuster ebenfalls als Signalmuster hinterlegt und diesem ein Zahlenwert (97) zugeordnet wird.

## Claims

1. Passenger transport system (1) with a device (21) for detecting users (81A-81F), wherein the passenger transport system (1) comprises a region (13) through which the users (81A-81F) can walk, and the device (21) has at least two sensors (25, 27) which operate according to the principle of transit time detection, and at least one signal evaluation unit (23) connected to said sensors (25, 27), wherein each sensor (25, 27) has at least one emitter (91) for transmitting electromagnetic waves into a detection region (83) and, adjoining this emitter (91), a receiver (89) for detecting the electromagnetic waves emitted by the emitter (91) and reflected out of the detection region (83) of the sensor (25, 27), wherein the emitter (91) and the receiver (89) of each sensor (25, 27) are directed into the region (13) that can be walked through, and the detection region (83) of each sensor (25, 27) is a three-dimensional space having a main direction axis (31, 33), wherein at least one sensor (25, 27) of the device (21) is respectively arranged on mutually opposite sides of the region (13) that can be walked through and that the main direction axes (31, 33) of the detection regions (83) of the sensors (25, 27) are arranged parallel to one another and orthogonally to the longitudinal extension of the region (13) that can be walked through, **characterized in that** the presence of a user (81A-81F) and his/her distance (d) relative to the detecting sensor (25, 27) can be detected by means of the transit time detection of the sensors (25, 27), and the number of simultaneously detected users (81A-81F) can be determined from the determined distances (d) of mutually opposite sensors (25, 27) by an evaluation by means of a comparison of the distance signal profiles.

2. Passenger transport system (1) according to Claim 1, wherein the width of the region (13) of the passenger transport system (1) through which the users (81A-81F) can walk is limited in the region of the sensors (25, 27) to two users (81A-81F) standing next to each other.

3. Passenger transport system (1) according to Claims 1 or 2, wherein the passenger transport system (1) is an escalator (3) or a moving walkway, the region (13) that can be walked through is delimited laterally by balustrades (15), and the sensors (25, 27) are arranged on or in said balustrades (15).

4. Passenger transport system (1) according to Claims 1 or 2, wherein the passenger transport system (1) is an elevator (53), the region (13) that can be walked through is delimited laterally by a shaft door frame (65) and/or a car door frame of the elevator (53), and the sensors (25, 27) are arranged on or in said door frame (65).

5. Passenger transport system (1) according to any one of Claims 1 to 4, wherein the detection regions (83) of mutually oppositely arranged sensors (25, 27) are positioned congruently with one another, and the emission of electromagnetic waves by the emitters (91) of the sensors (25, 27) are temporally offset to one another.

6. Passenger transport system (1) according to any one of Claims 1 to 4, wherein the detection regions (83) of mutually oppositely arranged sensors (25, 27) are positioned at an offset to one another, and the emission of electromagnetic waves by the emitters (91) of the sensors (25, 27) takes place simultaneously.

7. Passenger transport system (1) according to any one of Claims 1 to 4, wherein the detection regions (83) of mutually oppositely arranged sensors (25, 27) are positioned congruently with one another and the emission of electromagnetic waves by the emitters (91) of the sensors (25, 27) takes place simultaneously, wherein the frequencies of the electromagnetic waves differ from one another, and the receivers (89) have filters tuned to the frequency to be received.

8. Method for detecting users (81A-81F) of a passenger transport system (1) with a device (21) according to any one of Claims 1 to 7, **characterized in that** the transit times of the electromagnetic waves emitted and received back by the sensors (25, 27) are detected by two oppositely arranged sensors (25, 27) and passed as sensor signals (85, 87) to the signal evaluation unit (23), and the signal patterns arising from the signal profile of the sensor signals (85, 87) are analyzed in relation to a basic signal (G) in the signal evaluation unit (23) by the number of simultaneously detected users (81A-81F) being determinable from the determined distances (d) of mutually opposite sensors (25, 27) by an evaluation by means of a comparison of the distance signal profiles, and wherein a counter value (95) of a counting unit (93) of the signal evaluation unit (23) is changed as a function of the analyzed signal patterns.

9. Method according to Claim 8, wherein the analysis of the signal patterns are compared by comparing the rising and/or falling sections of the two signal profiles to an upper threshold range (O), to a middle threshold range (M), and to a lower threshold range (U), starting from the basic signal (G).

10. Method according to Claim 9, wherein as a function of the comparison, the counter value (95) of the counting unit (93) is:
• incremented by one if the first of the two sensor signals (83, 85) reaches the upper threshold range (O) and the second of the sensor signals (83, 85) reaches the middle threshold range (M) or lower threshold range (U);
• incremented by one if the first and second sensor signals (83, 85) reach the middle threshold range (M);
• incremented by two if the first and second sensor signals (83, 85) reach the lower threshold region (U).

11. Method according to Claim 8, wherein the signal evaluation unit (23) executes a pattern recognition algorithm by means of which the signal patterns of two mutually oppositely arranged sensors (25, 27) arising from the signal profile of the sensor signals (83, 85) are analyzed in relation to a basic signal (G), and a numerical value (97) is assigned to the analysis result of a specific stored signal pattern, and the counter value (95) of the counting unit (93) is incremented by said numerical value (97).

12. Method according to Claim 11, wherein the signal evaluation unit (23) carries out a pattern-matching algorithm and, in the case of a deviation of the signal pattern from the already stored signal patterns, the deviating signal pattern is likewise stored as a signal pattern and is assigned a numerical value (97).

## Revendications

1. Installation de transport de personnes (1) comportant un dispositif (21) permettant de détecter des utilisateurs (81A-81F), l'installation de transport de personnes (1) comprenant une zone pouvant être traversée (13) par les utilisateurs (81A-81F) et le dispositif (21) présentant au moins deux capteurs (25, 27) fonctionnant selon le principe de la détection du temps de parcours et au moins une unité d'évaluation de signaux (23) reliée auxdits capteurs (25, 27), chaque capteur (25, 27) présentant au moins un émetteur (91) pour l'émission d'ondes électromagnétiques dans une zone de détection (83) et, adjacent audit émetteur (91), un récepteur (89) pour la détection des ondes électromagnétiques émises par l'émetteur (91) et réfléchies depuis la zone de détection (83) du capteur (25, 27), l'émetteur (91) et le récepteur (89) de chaque capteur (25, 27) étant dirigés dans la zone pouvant être traversée (13) et la zone de détection (83) de chaque capteur (25, 27) étant un espace tridimensionnel présentant un axe de direction principal (31, 33), respectivement au moins un capteur (25, 27) du dispositif (21) étant disposé sur des côtés opposés l'un à l'autre de la zone pouvant être traversée (13) et en ce que les axes de direction principaux (31, 33) des zones de détection (83) des capteurs (25, 27) sont disposés parallèlement l'un à l'autre et orthogonalement à l'étendue longitudinale de la zone pouvant être traversée (13), **caractérisée en ce que** la présence d'un utilisateur (81A-81F) et sa distance (d) par rapport au capteur (25, 27) de détection peuvent être détectées au moyen de la détection du temps de parcours des capteurs (25, 27) et le nombre d'utilisateurs (81A-81F) détectés simultanément peut être déterminé à partir des distances (d) déterminées de capteurs (25, 27) opposés l'un à l'autre par une évaluation au moyen d'une comparaison des trajets de signaux de distance.

2. Installation de transport de personnes (1) selon la revendication 1, dans laquelle la largeur de la zone pouvant être traversée (13) par les utilisateurs (81A-81F) de l'installation de transport de personnes (1) est délimitée par deux utilisateurs (81A-81F) se tenant l'un à côté de l'autre dans la zone des capteurs (25, 27).

3. Installation de transport de personnes (1) selon la revendication 1 ou 2, dans laquelle l'installation de transport de personnes (1) est un escalier roulant (3) ou un trottoir roulant, la zone pouvant être traversée (13) est délimitée latéralement par des balustrades (15) et les capteurs (25, 27) sont disposés sur ou dans lesdites balustrades (15).

4. Installation de transport de personnes (1) selon la revendication 1 ou 2, dans laquelle l'installation de transport de personnes (1) est un ascenseur (53), la zone pouvant être traversée (13) est délimitée latéralement par un cadre de porte palière (65) et/ou un cadre de porte de cabine de l'ascenseur (53) et les capteurs (25, 27) sont disposés sur ou dans lesdits cadres de porte (65).

5. Installation de transport de personnes (1) selon l'une des revendications 1 à 4, dans laquelle les zones de détection (83) de capteurs (25, 27) disposés opposés l'un à l'autre sont positionnées de manière coïncidente l'une par rapport à l'autre et les émissions d'ondes électromagnétiques par les émetteurs (91) des capteurs (25, 27) sont décalées temporellement les unes des autres.

6. Installation de transport de personnes (1) selon l'une des revendications 1 à 4, dans laquelle les zones de détection (83) de capteurs (25, 27) disposés opposés l'un à l'autre sont positionnées décalées l'une par rapport à l'autre et les émissions d'ondes électromagnétiques par les émetteurs (91) des capteurs (25, 27) s'effectuent simultanément.

7. Installation de transport de personnes (1) selon l'une des revendications 1 à 4, dans laquelle les zones de détection (83) de capteurs (25, 27) disposés opposés l'un à l'autre sont positionnées de manière coïncidente l'une par rapport à l'autre et les émissions d'ondes électromagnétiques par les émetteurs (91) des capteurs (25, 27) s'effectuent simultanément, les ondes électromagnétiques étant différentes en fréquence et les récepteurs (89) présentant des filtres accordés en fonction de la fréquence à recevoir.

8. Procédé permettant la détection d'utilisateurs (81A-81F) d'une installation de transport de personnes (1) comportant un dispositif (21) selon l'une des revendications 1 à 7, **caractérisé en ce que** les temps de parcours détectés par deux capteurs (25, 27) disposés opposés des ondes électromagnétiques émises et reçues par les capteurs (25, 27) sont transmis en tant que signaux de capteurs (85, 87) à l'unité d'évaluation de signaux (23) et, dans l'unité d'évaluation de signaux (23), les motifs de signaux générés par le trajet de signal des signaux de capteurs (85, 87) sont analysés par rapport à un signal de base (G) par le fait que le nombre d'utilisateurs (81A-81F) détectés simultanément peut être déterminé à partir des distances (d) déterminées de capteurs (25, 27) opposés l'un à l'autre par une évaluation au moyen d'une comparaison des trajets de signaux de distance, et une valeur de compteur (95) d'une unité de comptage (93) de l'unité d'évaluation de signaux (23) étant modifiée en fonction des motifs de signaux analysés.

9. Procédé selon la revendication 8, dans lequel l'analyse des motifs de signaux sont comparées par comparaison des sections croissantes et/ou décroissantes des deux trajets de signaux avec une zone de seuil supérieure (O), avec une zone de seuil moyenne (M) et avec une zone de seuil inférieure (U) à partir du signal de base (G).

10. Procédé selon la revendication 9, dans lequel la valeur de compteur (95) de l'unité de comptage (93), en fonction de la comparaison :
• est augmentée de un lorsque le premier des deux signaux de capteurs (83, 85) atteint la zone de seuil supérieure (O) et le second des signaux de capteurs (83, 85) atteint la zone de seuil moyenne (M) ou la zone de seuil inférieure (U) ;
• est augmentée de un lorsque le premier et le second signal de capteurs (83, 85) atteignent la zone de seuil moyenne (M) ;
• est augmentée de deux lorsque le premier et le second signal de capteurs (83, 85) atteignent la zone de seuil inférieure (U).

11. Procédé selon la revendication 8, dans lequel un algorithme de reconnaissance de motif est exécuté dans l'unité d'évaluation de signaux (23), au moyen duquel le motif de signal de deux capteurs (25, 27) disposés opposés l'un à l'autre généré par le trajet de signal des signaux de capteurs (83, 85) est analysé par rapport à un signal de base (G) et le résultat d'analyse d'un motif de signal défini et enregistré est associé à une valeur numérique (97) et la valeur de compteur (95) de l'unité de comptage (93) est augmentée de ladite valeur numérique (97).

12. Procédé selon la revendication 11, dans lequel un algorithme de comparaison de motif est exécuté dans l'unité d'évaluation de signaux (23) et, en cas de différence du motif de signal par rapport aux motifs de signaux déjà enregistrés, le motif de signal différent est également enregistré en tant que motif de signal et une valeur numérique (97) lui est associée.
